# EUROPÄISCHE PATENTSCHRIFT

(11) **EP 0 819 585 B1**
(45) Veröffentlichungstag und Bekanntmachung des Hinweises auf die Patenterteilung: **28.04.1999**
(21) Anmeldenummer: 97112115.7
(22) Anmeldetag: 16.07.1997
(51) Int. Cl.: B60R 21/20

(54) **Vorrichtung zum Aufblasen eines in einem Lenkrad untergebrachten Airbags**
Inflating device for an airbag provided in a steering wheel
Dispositif de gonflage d'un sac de sécurité gonflable monté dans un volant de direction

(30) Priorität: 20.07.1996 DE 19629339
(43) Veröffentlichungstag der Anmeldung: 21.01.1998
(73) Patentinhaber: MST Automotive GmbH Automobil-Sicherheitstechnik, 63743 Aschaffenburg (DE)
(72) Erfinder: Metzger, Marcus, 76534 Baden-Baden (DE)
(74) Vertreter: Degwert, Hartmut, Dipl.-Phys.

(56) Entgegenhaltungen:
- EP-A- 0 451 731
- DE-A- 2 129 968
- DE-A- 4 327 098
- GB-A- 2 293 799
- US-A- 5 342 089

## Beschreibung

Die Erfindung betrifft eine Vorrichtung zum schnellen Aufblasen eines in einem Lenkrad untergebrachten Airbags mit einem Gehäuse, einem rohrförmig ausgebildeten und in der Lenksäule angeordneten Druckgasbehälter, einem pyrotechnischen Treibsatz, einem Zünder, einem Druckstück und einer Berstscheibe, wobei der Treibsatz und der Zünder im Gehäuse angeordnet sind, und wobei das Gehäuse eine Mischkammer mit einem offenen, im wesentlichen parallel zur Lenksäulenachse verlaufendem Auslaß zum Airbag sowie einem ebenfalls im wesentlichen parallel zur Lenksäulenachse verlaufenden Durchlaß zwischen Druckgasbehälter und Mischkammer aufweist, der durch die Berstscheibe verschlossen ist, die bei Zündung des Treibsatzes mittels des Druckstückes zerstörbar ist, so daß die gasförmigen Verbrennungsprodukte des Treibsatzes und das Druckgas gemischt in den Airbag abströmen können.

Eine derartige Vorrichtung ist aus der US-Patentschrift 5 342 089 A bekannt. Der innerhalb der Lenksäule untergebrachte Druckgasbehälter ist lenkradseitig mittels einer Scheibe aus sprödem Material verschlossen, die bei einer Aktivierung der Vorrichtung von einem angespitzten Bolzen zerstört wird, der in einer Hülse geführt ist und durch Zündung einer pyrotechnischen Ladung gegen die Scheibe geschossen wird. Die Verwendung eines spröden Materials für den Verschluß des Druckgasbehälters erfordert besondere Vorkehrungen, um zu vermeiden, daß Bruchstücke der zerstörten Scheibe vom Druckgas in den Airbag und durch diesen hindurch gegen die zu schützende Person geschleudert werden. Außerdem erfordert die Unterbringung und Anordnung einer derartigen Scheibe besondere Sorgfalt, damit sie nicht unbeabsichtigt zerstört werden kann. Dies wiederum schränkt die konstruktiven Möglichkeiten für die Anordnung der übrigen erforderlichen Bauteile ein.

Bei anderen einschlägigen Vorrichtungen ist der Durckgasbehälter nicht in der Lenksäule untergebracht. So ist aus der europäischen Patentschrift 0 554 919 eine Vorrichtung bekannt geworden, bei der der Druckgasbehälter und der pyrotechnische Treibsatz in der Mitte des topfartig ausgebildeten Lenkrades oberhalb des Lenksäulenendes untergebracht ist, vorzugsweise in Form eines torusförmigen Druckbehälters, der konzentrisch zur Lenksäulenachse bzw. zum Lenkradkranz liegt und in dessen Mitte der pyrotechnische Treibsatz angeordnet ist.

Bei der Vorrichtung gemäß US 54 82 315 A ist ebenfalls vorgesehen, den Airbag mit einer Mischung aus Druckgas und dem bei der Zündung des Treibsatzes entstehenden gasförmigen Verbrennungsprodukt zu füllen. In diesem Fall dient die Lenksäule selbst als Druckgasbehälter, wobei der Treibsatz in dem dem Lenkrad entgegengesetzten Ende der Lenksäule untergebracht ist.

Bei der Vorrichtung gemäß DE-OS 21 29 901 ist ein Gehäuse vorgesehen, in das der Auslaß des Druckgasbehälters mündet und das unter dem gleichen Druck steht, wie der Druckgasbehälter. Quer zur Einströmrichtung des Druckgases ist in dem Gehäuse ein Treibsatz angeordnet, der bei Zündung gasförmige Verbrennungsprodukte entwickelt, mittels derer nacheinander die Trennwand zwischen Treibsatzbehälter und Innenraum des Gehäuses sowie die Trennwand zum Auslassen des Gasgemisches in den Airbag aufgerissen werden. Bei dieser Vorrichtung ist weder der Airbag im Lenkrad noch der Druckgasbeälter im Lenkrad oder in der Lenksäule untergebracht.

Diese Vorrichtungen sind bereits ausgeführt worden und haben sich bewährt. Für ihre Unterbringung innerhalb des Lenkrades steht aber nur ein begrenzter Bauraum zur Verfügung, was einer an sich wünschenswerte Vergrößerung des Airbags entgegensteht, insbesondere dann, wenn in dem verfügbaren Raum in zunehmendem Maße weitere Betätigungsorgane untergebracht werden sollen, damit zusätzliche Sekundärfünktionen des Kraftfahrzeugs initiiert werden können, ohne daß der Fahrer das Lenkrad loslassen muß.

Es ist daher schon vorgeschlagen worden, den Druckgasbehälter zylindrisch auszubilden und unterhalb des Lenkrades im Bereich der Lenksäule anzuordnen. Damit gewinnt man in dem dem Fahrer zugewandten Bereich des Lenkrades zusätzlichen Bauraum für die Unterbringung eines größeren Airbags bzw. für zusätzliche Betätigungsorgane im Griffbereich des Fahrers. Die Umgestaltung des Druckbehälters und seine Verlagerung in Richtung Lenksäule führt aber zwangsläufig dazu, daß das Druckgas einen längeren Strömungsweg durchlaufen muß und daß auch das bekannte Verschlußsystem nicht beibehalten werden kann, bei dem durch ein einziges Berstelement praktisch gleichzeitig die gasförmigen, pyrotechnischen Verbrennungsprodukte und das Druckgas zum Einströmen in den Airbag freigegeben werden.

Der Erfindung liegt die Aufgabe zugrunde, die bekannte Vorrichtung so weiterzuentwickeln, daß die angestrebte größere Freiheit bei der Unterbringung der erforderlichen Teile erreicht werden kann, ohne daß funktionelle Nachteile in Kauf genommen werden müssen. Außerdem sollen die für ein einwandfreies Funktionieren maßgebenden Bauteile möglichst einfach und kostengünstig herstellbar sein, damit die mit der freieren Anordnung möglichen Vorteile für den Benutzer auch genutzt werden können und nicht den inzwischen durchgängig praktizierten Rationalisierungsbemühungen zum Opfer fallen.

Zur Lösung der Aufgabe wird erfindungsgemäß eine Vorrichtung der eingangs genannten Art vorgeschlagen, die dadurch gekennzeichnet ist, daß
- die Berstscheibe ein als ganzes längs zweier Sollbruchstellen absprengbares und im Gehäuse rückhaltbares Stirnteil aufweist,
- der Raum für die Unterbringung von Treibsatz, Zünder, Druckstuck und Berstscheibe im Gehäuse aus einer quer zur Lenksäulenachse angeordneten, abgestuften, zylindrischen Ausnehmung besteht und daß
- der Funktionsweg von Druckstück und Berstscheibe koaxial zur Achse der zylindrischen Ausnehmung verläuft.

Wie beim Stand der Technik werden in dem Gehäuse der Raum für den Treibsatz und der Druckgasbehälter durch eine Berstscheibe verschlossen und im Falle der Zündung des Treibsatzes gleichzeitig geöffnet. Dabei ist dafür gesorgt, daß die beiden Gasströme im wesentlichen senkrecht aufeinanderstoßen und sich so gut miteinander vermischen können. Außerdem ist dafür gesorgt, daß möglichst kurze Strömungswege realisiert werden können, so daß die Aufblaszeit durch die gegenüber dem Stand der Technik geänderte Anordnung nicht nennenswert beeinträchtigt wird. Vor allem wurde darauf geachtet, daß die funktionsmäßig wichtigen Bauteile unter Berücksichtigung der bei Großserien möglichen fertigungstechnischen sowie der funktional notwendigen Toleranzen kostengünstig herstellbar sind.

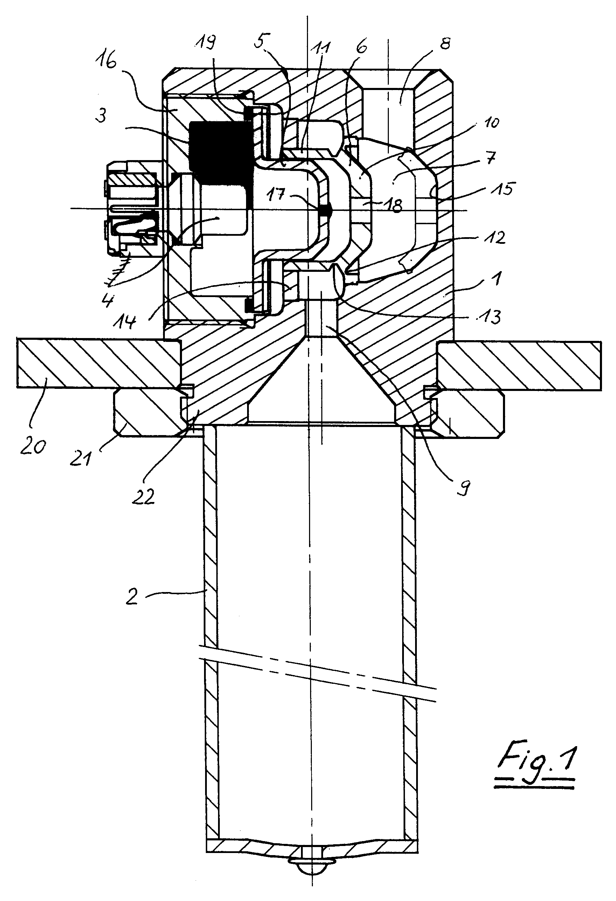

Vorteilhafte Ausgestaltungen und Abwandlungen des Erfindungsgedankens sind in den Ansprüchen 2-14 beschrieben. Weitere Einzelheiten werden anhand des in Fig. 1 dargestellten Ausführungsbeispiels näher erläutert.

Das zentrale Gehäuse gemäß Fig. 1 hat einen Gewindestutzen 22 und ist mittels einer Überwurfmutter 21 mit einem Montageflansch 20 verbunden, der konstruktiv nicht weiter ausgeführt ist und wie üblich zur Verbindung des Lenkrades mit der Lenksäule dient. Mit dem Gehäuse 1 ist ein rohrförmiger, von unten zu befüllender Druckgasbehälter 2 durch Schweißen oder dergl. verbunden, wobei im Gehäuse 1 ein Durchlaß 9 für das Druckgas ausgebildet ist.

Das Gehäuse 1 besitzt ferner einen Auslaß 8 für das Gasgemisch aus Verbrennungsprodukten des pyrotechnischen Treibsatzes und Druckgas, das im Crashfall zum Befüllen des Airbags dient. Auslaß 8 und Durchlaß 9 sind koaxial zur Achse des rohrförmigen Druckgasbehälters 2 in das Gehäuse (1) eingearbeitet und münden in eine Mischkammer 7, wobei ohne weiteres auch mehrere parallele Durchlässe 9 bzw. Auslässe 8 angeordnet werden können. Insofern ist jede beliebige Abstimmung der Strömungsquerschnitte auf die gewünschten Aufblaszeiten bzw. Drosselungsverhältnisse möglich.

Der Treibsatz 3 und der Zünder 4 sind in einem Schraubeinsatz 16 untergebracht, der von einem Druckstück 5 abgeschlossen ist, das randseitig mit dem Schraubeinsatz 16 funktional lösbar verbunden ist und einen abgedichteten Durchlaß 17 aufweist. Dabei ist der Durchlaß 17 nur in dem Sinne abgedichtet, daß das meist pulverförmige Material des Treibsatzes 3 nicht herausfallen kann und die gesamte Zündeinrichtung ein abgeschlossenes System gegenüber Umwelteinflüssen bildet. Bei einer Zündung genügt ein geringer Überdruck bzw. die Zündenergie des Zünders (4), den Durchlaß 17 zu öffnen und ein gewisses Vorausströmen der gasförmigen Verbrennungsprodukte zuzulassen, bevor das Druckstück 5 infolge des Druckanstiegs bzw. die Zündenergie des Zünders (4) aus seiner randseitigen Halterung beschleunigt und gegen die topfförmige Berstscheibe 6 geschleudert wird. Letztere besteht aus einem Zylinderteil 11 und einem Stirnteil 10, das ebenfalls ein Loch 18 zum Vor-Auslaß von Verbrennungsprodukten aufweist. Die Berstscheibe 6 ist an ihrem Zylinderteil 11 und an ihrem Stirnteil 10 mittels Laserschweißung mit dem Gehäuse 1 verbunden, wobei zwischen Gehäuse 1 und Zylinderteil 11 noch ein Zwischenring 14 angeordnet ist, damit das Gehäuse 1 in einer Werkzeugeinspannung von links her in einfacher Weise und unter Vermeidung von Hinterschneidungen bearbeitet werden kann. Die Berstscheibe 6 hat zwei umlafende Sollbruchstellen 12 und 13, längs derer der zentrale Bereich des Stirnteils 10 abreißt, wenn der Zünder 4 aktiviert, wodurch das Druckstück 5 infolge der Freisetzung der Zündenergie bzw. der schlagartigen Verbrennung des Treibsatzes 3 je nach Auslegung den zur Öffnung notwendigen Impuls erfährt. Der Funktionsweg des Druckstückes 5 ist durch den Zwischenring 14 bzw. durch einen Anschlag 19 im Gehäuse 1 begrenzt, während der abgerissene Bereich des Stirnteils 10 in einer Ausnehmung 15 des Gehäuses 1 aufgefangen wird. Nach dem Abreißen des Stirnteils 10 wird vom Durchlaß 9 über die Mischkammer 7 zum Auslaß 8 ein etwas versetzter, im übrigen aber verlustarmer Strömungsweg für das ausströmende Druckgas gebildet, in das die gasförmigen Verbrennungsprodukte aus der Restverbrennung des Treibsatzes 3 durch den Durchlaß 17 des Druckstückes 5, das dann mit seinem äußeren Rand am Anschlag 19 des Gehäuses 1 bzw. am Zwischenring 14 anliegt, quer zur Strömungsrichtung eingebracht und optimal vermischt werden, wobei die expansionsbedingte Abkühlung des Druckgases durch die heißen Verbrennungsgase kompensiert wird. Dabei kann durch die Kalibrierung des Durchlasses 17, durch die Bemessung der Querschnitte von Durchlaß 9 und Auslaß 8 sowie durch die jeweils vorgesehene Menge an Treibsatzmittel Einfluß auf das Mischungsverhalten und die Temperatur des in den Airbag abströmenden Gasgemisches genommen werden.

Die erfindungsgemäße Vorrichtung ist kostengünstig herstellbar und erfüllt alle funktionellen Anforderungen. Sie erlaubt eine freiere Aufteilung und Nutzung des verfügbaren Bauraumes und stellt eine schon länger gesuchte Alternative zu der bekannten, gattungsmäßigen Vorrichtung dar.

## Patentansprüche

1. Vorrichtung zum schnellen Aufblasen eines in einem Lenkrad untergebrachten Airbags mit einem Gehäuse (1), einem rohrförmig ausgebildeten und in der Lenksäule angeordneten Druckgasbehälter (2), einem pyrotechnischen Treibsatz (3), einem Zünder (4), einem Druckstuck (5) und einer Berstscheibe (6), wobei der Treibsatz (3) und der Zünder (4) im Gehäuse (1) angeordnet sind, und wobei das Gehäuse (1) eine Mischkammer (7) mit einem offenen, im wesentlichen parallel zur Lenksäulenachse verlaufendem Auslaß (8) zum Airbag sowie einem ebenfalls im wesentlichen parallel zur Lenksäulenachse verlaufendem Durchlaß (9) zwischen Druckgasbehälter (2) und Mischkammer (7) aufweist, der durch die Berstscheibe (6) verschlossen ist, die bei Zündung des Treibsatzes (3) mittels des Druckstückes (5) zerstörbar ist, so daß die gasförmigen Verbrennungsprodukte des Treibsatzes (3) und das Druckgas gemischt in den Airbag abströmen können, dadurch gekennzeichnet daß
- die Berstscheibe (6) ein als ganzes längs zweier Sollbruchstellen (12, 13) absprengbares und im Gehäuse (1) rückhaltbares Stirnteil (10) aufweist,
- der Raum für die Unterbringung von Treibsatz (3), Zünder (4), Druckstück (5) und Berstscheibe (6) im Gehäuse (1) aus einer quer zur Lenksäulenachse angeordneten, abgestuften, zylindrischen Ausnehmung besteht und daß
- der Funktionsweg von Druckstück (5) und Berstscheibe (6) koaxial zur Achse der zylindrischen Ausnehmung verläuft.

2. Vorrichtung nach Anspruch 1, dadurch gekennzeichnet, daß die Berstscheibe (6) napfförmig mit einem Stirnteil (10) und einem Zylinderteil (11) ausgebildet ist und daß sowohl im Stirnteil (10) wie auch im Zylinderteil (11) eine durch Materialschwächung erzeugte umlaufende Sollbruchstelle (12, 13) vorgesehen ist.

3. Vorrichtung nach Anspruch 2, dadurch gekennzeichnet, daß das Stirnteil (10) einen größeren Außendurchmesser aufweist als das Zylinderteil (11).

4. Vorrichtung nach Anspruch 3, dadurch gekennzeichnet, daß die Berstscheibe (6) im Bereich des Stirnteils (10) unmittelbar und im Bereich des Zylinderteils (11) mittelbar unter Zwischenlage eines Abstandsringes (14) mit dem Gehäuse (1) verbunden ist.

5. Vorrichtung nach Anspruch 4, dadurch gekennzeichnet, daß Berstscheibe (6) und Gehäuse (1) mittels Laserschweißung miteinander verbunden sind.

6. Vorrichtung nach einem der Ansprüche 1 bis 5, dadurch gekennzeichnet, daß die zylindrische Ausnehmung im Gehäuse (1) derart gestaltet ist, daß alle spangebenden Bearbeitungsschritte von einer Seite her erfolgen können, und daß das Gehäuse (1) zur anderen Seite hin geschlossen ist.

7. Vorrichtung nach einem der Ansprüche 1 bis 6, dadurch gekennzeichnet, daß in der Mischkammer (7) eine Ausnehmung (15) zur Aufnahme der abgesprengten Berstscheibe (6) vorgesehen ist.

8. Vorrichtung nach einem der Ansprüche 1 bis 7, dadurch gekennzeichnet, daß der Auslaß (8) zum Airbag gegenüber dem Durchlaß (9) zwischen Druckgasbehälter (2) und Mischkammer (7) um mindestens den Funktionsweg der Berstscheibe (6) parallel versetzt angeordnet ist.

9. Vorrichtung nach einem der Ansprüche 1 bis 8, dadurch gekennzeichnet, daß das Druckstück (5) hutförmig ausgebildet und randseitig mit einem Schraubeinsatz (16) verbunden ist, der zur Aufnahme des Treibsatzes (3) und des Zünders (4) dient.

10. Vorrichtung nach einem der Ansprüche 1 bis 9, dadurch gekennzeichnet, daß das Druckstück (5) einen abgedichteten Durchlaß (17) aufweist, der sich bei Zündbeginn öffnet und zum Vor-Auslaß von gasförmigen Verbrennungsprodukten dient.

11. Vorrichtung nach Anspruch 10, dadurch gekennzeichnet, daß auch die Berstscheibe (6) ein Loch (18) zum Vor-Auslaß von gasförmigen Verbrennungsprodukten aufweist.

12. Vorrichtung nach einem der Ansprüche 1 bis 11, dadurch gekennzeichnet, daß im Gehäuse (1) ein Anschlag (19) zur Wegbegrenzung für das Druckstück (5) vorgesehen ist.

13. Vorrichtung nach einem der Ansprüche 1 bis 12, dadurch gekennzeichnet, daß der Druckgasbehälter (2) durch Schweißen mit dem Gehäuse (1) verbunden ist.

14. Vorrichtung nach einem der Ansprüche 1 bis 13, dadurch gekennzeichnet, daß das Gehäuse (1) über einen Gewindestutzen (22) und eine Überwurfmutter (21) mit einem Montageflansch (20) verbunden ist.

## Claims

1. A device for rapidly inflating an airbag accommodated in a steering wheel, comprising a housing (1), a tubular compressed gas container (2) disposed in the steering wheel column, a pyrotechnical propellant charge (3), an igniter (4), a thruster (5), and a bursting disk (6), said propellant charge (3) and said igniter (4) being arranged in said housing (1) and said housing (1) comprising a gas-combining chamber (7) having an open outlet (8) to the airbag, said outlet (8) extending substantially parallel to the axis of the steering wheel column, and a port (9) between said compressed gas container (2) and said gas-combining chamber (7), said port (9) also extending substantially parallel to the axis of the steering wheel column and being closed off by said bursting disk (6) which is adapted to be destroyed by means of said thruster (5) on ignition of said propellant charge (3), so that the combined gaseous combustion products of said propellant charge (3) and the compressed gas are able to escape into the airbag, characterized in that
- said bursting disk (6) has a front portion (10) which is adapted to be blown off as a whole along two predetermined breaking sites (12, 13) and adapted to be retained in said housing (1),
- the space for accommodating said propellant charge (3), said igniter (4), said thruster (5) and said bursting disk (6) in said housing (1) consists of a graduated-diameter cylindrical recess disposed transversely to the axis of the steering wheel column, and
- the effective path travelled by said thruster (5) and said bursting disk (6) extends coaxially to the axis of the cylindrical recess.

2. The device according to claim 1, characterized in that said bursting disk (6) is cup-shaped and has a front portion (10) and a cylinder portion (11), and that predetermined breaking sites (12, 13) in the form of a weakened material are provided extending around both said front portion (10) and said cylinder portion (11).

3. The device according to claim 2, characterized in that said front portion (10) has an outer diameter which is larger than that of said cylinder portion (11).

4. The device according to claim 3, characterized in that said bursting disk (6) is connected to said housing (1), directly in the region of said front portion (10) and indirectly by an intermediate annular spacer (14) in the region of said cylinder portion (11).

5. The device according to claim 4, characterized in that said bursting disk (6) and said housing (1) are connected to each other by laser welding.

6. The device according to any one of claims 1 to 5, characterized in that the cylindrical recess in said housing (1) is designed to allow all metal-cutting steps to be done from one side and that the other side of said housing (1) is closed.

7. The device according to any one of claims 1 to 6, characterized by a recess (15) in said gas-combining chamber (7) for receiving said bursting disk (6) after it has been blown off.

8. The device according to any one of claims 1 to 7, characterized in that said outlet (8) to the airbag is offset parallel with respect to said port (9) between said compressed gas container (2) and said gas-combining chamber (7) by at least the effective path travelled by said bursting disk (6).

9. The device according to any one of claims 1 to 8, characterized in that said thruster (5) is in the shape of a hat and is connected at its rim to a threaded insert (16) which serves to accommodate said propellant charge (3) and said igniter (4).

10. The device according to any one of claims 1 to 9, characterized in that said thruster (5) has a sealed port (17) which opens when ignition starts and serves for a preliminary outflow of gaseous combustion products.

11. The device according to claim 10, characterized in that said bursting disk (6) also has a hole (18) for preliminary outflow of gaseous combustion products.

12. The device according to any one of claims 1 to 11, characterized in that a stop (19) is provided in said housing (1) for limiting the path travelled by said thruster (5).

13. The device according to any one of claims 1 to 12, characterized in that said compressed gas container (2) is connected to said housing (1) by welding.

14. The device according to any one of claims 1 to 13, characterized in that said housing (1) is connected to an assembling flange (20) by a threaded neck (22) and a union nut (21).

## Revendications

1. Dispositif de gonflage rapide d'un coussin gonflable de sécurité logé dans un volant de direction, comprenant un boîtier (1), un récipient de gaz comprimé (2) configuré de façon tubulaire et aménagé dans la colonne de direction, une charge propulsive pyrotechnique (3), une amorce (4), un élément de poussée (5) et une rondelle d'éclatement (6), la charge propulsive (3) et l'amorce (4) étant disposées dans le boîtier (1), et le boitier (1) comportant une chambre de mélange (7) ayant une sortie ouverte (8) vers le coussin gonflable, s'étendant essentiellement parallèlement à l'axe de la colonne de direction, ainsi qu'un passage (9) également aménagé essentiellement parallèlement à l'axe de la colonne de direction, entre le récipient (2) de gaz comprimé et la chambre de mélange (7), obturé par la rondelle d'éclatement (6) qui, lors de l'allumage de la charge propulsive (3), peut être détruite au moyen de l'élément de poussée (5), de sorte que les produits gazeux de la combustion de la charge propulsive (3) et le gaz comprimé puissent s'échapper vers le coussin gonflable sous forme d'un mélange,
caractérisé en ce que
la rondelle d'éclatement (6) comprend une partie frontale unitaire (10) pouvant être éclatée suivant deux zones de rupture (12, 13) et pouvant être retenue dans le boîtier (1), que
l'espace pour loger la charge propulsive (3), l'amorce (4), l'élément de poussée (5) et la rondelle d'éclatement (6) est constitué d'un évidement étagé cylindrique aménagé transversalement à l'axe de la colonne de direction, dans le boîtier (1), et que
la course de fonctionnement de l'élément de poussée (5) et de la rondelle d'éclatement (6) est dirigée coaxialement à l'axe de l'évidement cylindrique.

2. Dispositif selon la revendication 1, caractérisé en ce que la rondelle d'éclatement (6) est configurée sous forme d'une cuvette, comprenant une partie frontale (10) et une partie cylindrique (11), et qu'une zone de rupture périphérique (12, 13) créée par amincissement de la matière est prévue à la fois dans la partie frontale (10) et dans la partie cylindrique (11).

3. Dispositif selon la revendication 2, caractérisé en ce que la partie frontale (10) présente un diamètre extérieur supérieur à celui de la partie cylindrique (11).

4. Dispositif selon la revendication 3, caractérisé en ce que la rondelle d'éclatement (6) est reliée au boîtier (1), de façon directe au niveau de la partie frontale (10), et de façon indirecte, par l'intermédiaire d'une bague d'écartement intercalée (14), au niveau de la partie cylindrique (11).

5. Dispositif selon la revendication 4, caractérisé en ce que la rondelle d'éclatement (6) et le boîtier (1) sont reliés l'un à l'autre par soudage au laser.

6. Dispositif selon l'une des revendications 1 à 5, caractérisé en ce que l'évidement cylindrique prévu dans le boîtier (1) est configuré de manière telle que toutes les étapes d'usinage dégageant des copeaux puissent être effectuées d'un seul côté, et en ce que le boîtier (1) est fermé de l'autre côté.

7. Dispositif selon l'une des revendications 1 à 6, caractérisé en ce qu'un évidement (15) est prévu dans la chambre de mélange (7) afin de recevoir la rondelle d'éclatement détachée (6).

8. Dispositif selon l'une des revendications 1 à 7, caractérisé en ce que la sortie (8) vers le coussin gonflable est aménagée de façon parallèlement décalée par rapport au passage (9) entre le récipient de gaz comprimé (2) et la chambre de mélange (7), d'une valeur représentant au moins la course de fonctionnement de la rondelle d'éclatement (6).

9. Dispositif selon l'une des revendications 1 à 8, caractérisé en ce que l'élément de poussée (5) est configuré en forme de chapeau et est relié, par son bord latéral, à un insert fileté (16) servant à accueillir la charge propulsive (3) et l'amorce (4).

10. Dispositif selon l'une des revendications 1 à 9, caractérisé en ce que l'élément de poussée (5) comporte un passage étanche (17), qui s'ouvre au début de l'allumage et sert au pré-échappement de produits gazeux de combustion.

11. Dispositif selon la revendication 10, caractérisé en ce que la rondelle d'éclatement (6) comporte, elle aussi, un trou (18) permettant le pré-échappement de produits gazeux de combustion.

12. Dispositif selon l'une des revendications 1 à 11, caractérisé en ce qu'une butée (19) est prévue dans le boîtier (1) pour limiter la course de l'élément de poussée (5).

13. Dispositif selon l'une des revendications 1 à 12, caractérisé en ce que le récipient de gaz comprimé (2) est relié au boîtier (1) par soudage.

14. Dispositif selon l'une des revendications 1 à 13, caractérisé en ce que le boîtier (1) est relié à une bride de montage (20) par l'intermédiaire d'un embout fileté (22) et d'un écrou-raccord (21).
